# FASCICULE DE BREVET EUROPEEN

(11) **EP 3 939 815 B1**
(45) Date de publication et mention de la délivrance du brevet: **23.08.2023**
(21) Numéro de dépôt: 21181237.5
(22) Date de dépôt: 23.06.2021
(51) Int. Cl.: B60J 10/86, F16B 33/00, F16B 37/14, F16B 43/00

(54) **PORTE DE VÉHICULE AUTOMOBILE**
TÜR EINES KRAFTFAHRZEUGS
MOTOR VEHICLE DOOR

(30) Priorité: 15.07.2020 FR 2007383
(43) Date de publication de la demande: 19.01.2022
(73) Titulaire: Renault s.a.s, 92100 Boulogne Billancourt (FR)
(72) Inventeur: CHAPRON, Thibault, 78210 SAINT CYR L'ECOLE (FR); MONTFORT, Patrice, 78770 AUTOUILLET (FR)
(74) Mandataire: Renault Group

(56) Documents cités:
- WO-A2-2004/108451
- DE-A1- 10 334 143
- DE-A1- 10 342 067

## Description

La présente invention concerne une porte de véhicule automobile comportant un caisson de porte doté d'un panneau extérieur, ladite porte étant apte à être pourvue d'un joint d'étanchéité fixé sur le caisson à l'opposé du panneau extérieur, destiné à assurer l'étanchéité tout autour de la porte avec un côté de caisse de véhicule automobile lorsque la porte est dans une configuration de fermeture par rapport à ce côté de caisse.

Ainsi, il est connu, par exemple du document DE10334143 A1, d'utiliser des joints d'étanchéité au niveau des portes latérales des véhicules automobiles pour assurer l'étanchéité de l'habitacle vis-à-vis de l'extérieur et/ou encore l'insonorisation de l'habitacle.

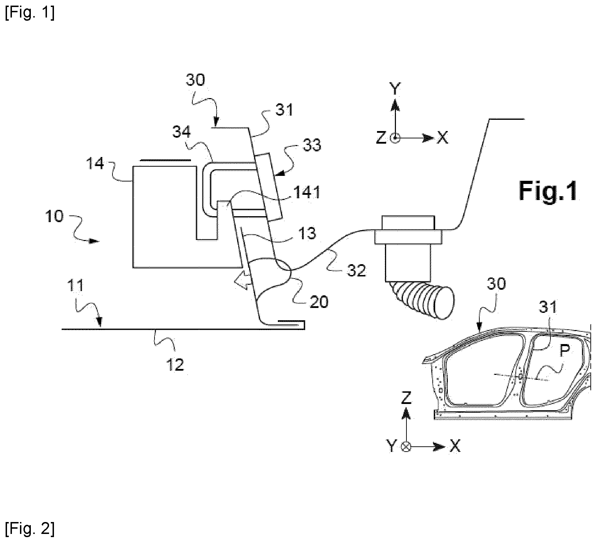

La figure 1 représente en coupe selon le plan P correspondant sensiblement au plan longitudinal transversal XY du véhicule, une portion d'une porte latérale 10 de véhicule automobile, par exemple une porte avant, située en regard du pied milieu 31 d'un côté de caisse 30 du véhicule. En référence à cette figure, il est connu d'équiper la porte latérale 10 avec un joint d'étanchéité 20, sensiblement tubulaire, formant une boucle s'étendant sur quasiment tout le pourtour de la porte. Plus précisément, cette porte 10 comporte un caisson de porte 11 doté d'un panneau extérieur 12 et le joint d'étanchéité est fixé sur le chant 13 du caisson à l'opposé du panneau extérieur 12. Comme illustré à la figure 1, le joint 20 est destiné à s'appuyer contre le côté de caisse 30 du véhicule lorsque la porte est fermée sur le côté de caisse, de façon à assurer l'étanchéité tout autour de la porte entre le chant 13 du caisson de porte 11 et le côté de caisse 30.

S'agissant d'une étanchéité principale, il est primordial de n'avoir aucune discontinuité entre le joint 20 et son appui, porte fermée. Le joint 20 étant fixé sur le caisson de porte 11, son trajet le long du pourtour de la porte peut se trouver contraint par des pièces équipant la porte, ainsi que par leurs éléments de fixations, qui sont susceptibles de s'étendre au travers de ce trajet. Il en va ainsi par exemple de la serrure 14 de fermeture dont est munie la porte 10 sur son chant 13 et de sa vis (non représentée) qui fixe la serrure sur la tôlerie du caisson de porte. La serrure 14 et ses fixations imposent alors au trajet de joint de s'écarter sensiblement vers l'extérieur pour contourner ces pièces en arrivant à leur niveau. Il en résulte un trajet plus ou moins torturé du joint 20 le long du pourtour de la porte. Dans la mesure où le joint 20 est destiné à s'appuyer sur le côté de caisse 30, porte fermée, le profil torturé du trajet de joint va également se répercuter sur la forme du côté de caisse 30. Ce dernier doit en effet nécessairement suivre le trajet du joint sur le pourtour de la porte pour garantir un appui sans discontinuité avec le joint. Ainsi par exemple, comme illustré à la figure 1, la forme imposée sur le côté de caisse 30 par le trajet du joint 20 dans l'environnement de la serrure de porte 14, se traduit par une augmentation de volume localisée 32 faisant saillie vers l'extérieur sur le pied milieu 31 de la caisse dans la zone en regard de la serrure de porte 14.

Or, le côté de caisse 30 étant classiquement réalisé en tôle emboutie, il peut s'avérer complexe à réaliser car les formes qui lui sont imposées par le trajet de joint, telles que la forme 32 illustrée sur la figure 1, sont, pour certaines, très difficiles à réaliser par emboutissage. Ce problème est exacerbé lorsque le côté de caisse est réalisé en aluminium. La réalisation de ces formes complexes nécessite souvent d'élargir significativement le pied avant sur lequel est articulée à rotation la porte avant, ainsi que le pied milieu sur lequel la porte est maintenue fermée à l'état verrouillé. Or, l'élargissement des pieds se traduit par la réduction du passage de porte, ce qui est pénalisant pour l'ergonomie du véhicule, en particulier en termes d'accessibilité. De surcroît, un tel élargissement, en particulier du pied milieu, n'est pas souhaitable, car cela dégrade la perception générale de la ligne du véhicule. En effet, la partie supérieure du pied milieu, qui est visible, dépend de la largeur de la partie inférieure du pied.

Aussi, un but de l'invention est de proposer une porte de véhicule automobile apte à être pourvue d'un joint d'étanchéité, qui permette de remédier, au moins en partie, aux inconvénients précités s'agissant de la forme du côté de caisse formant appui pour le joint, porte fermé.

A cette fin, l'invention concerne une porte de véhicule automobile comportant un caisson de porte doté d'un panneau extérieur, ladite porte étant apte à être pourvue d'un joint d'étanchéité fixé sur le caisson à l'opposé du panneau extérieur, ledit joint cheminant le long du pourtour de la porte sur un chant du caisson de façon à assurer l'étanchéité tout autour de la porte entre ledit chant du caisson et un côté de caisse de véhicule automobile lorsque la porte est dans une configuration de fermeture par rapport à ce côté de caisse, ladite porte étant munie sur son chant d'au moins un équipement de porte monté sur le caisson de porte par l'intermédiaire d'au moins une vis de fixation, ladite porte comprend un support de joint monté solidaire de ladite vis de fixation, ledit support de joint comportant une lame souple apte à recouvrir de façon amovible une tête de la vis de fixation, ladite lame souple définissant, dans sa position de recouvrement de la tête de vis, une surface externe convexe destinée à être épousée au moins partiellement par ledit joint. Le support de joint est une pièce distincte du joint destiné à épouser la surface externe dudit support de joint.

Grâce à cet agencement, le joint peut cheminer directement au droit de la zone occupée par la vis de fixation, le joint venant épouser à cet endroit la surface externe convexe de la lame souple recouvrant la tête de vis. Il en résulte ainsi un parcours optimisé pour le joint, au bénéfice de la facilité de réalisation des formes impliquées sur le côté de caisse. Le côté de caisse étant plus lissé, il en résulte une meilleure qualité perçue lorsque la porte est ouverte, d'autant plus que la vis de fixation est avantageusement masquée par la lame souple.

Avantageusement, ledit support de joint comporte une embase rigide apte à être insérée entre ledit chant dudit caisson de porte et la tête de vis de ladite vis de fixation, ladite embase rigide étant solidaire de ladite lame souple.

Avantageusement, ladite lame souple est fixée sur ladite embase rigide par clipsage.

Avantageusement, ladite lame souple comporte, à l'opposé de ladite surface externe convexe, des pions faisant saillie en direction de ladite embase rigide et destinés à être engagés serrés dans des orifices correspondants prévus sur ladite embase rigide.

De préférence, lesdits pions et ladite lame souple viennent de moulage d'une seule pièce.

Avantageusement, les bords de la lame souple forment des lèvres souples, lesdites lèvres souples étant destinées à s'appliquer sur des surfaces du chant dudit caisson de porte s'étendant autour dudit support de joint, lorsque ladite lame souple est en position de recouvrement de la tête de vis.

Avantageusement, des orifices de montage sont agencés sur la surface du chant dudit caisson de porte, immédiatement en amont et en aval dudit support de joint, suivant la direction de cheminement du joint, lesdits orifices de montage étant aptes à recevoir par clipsage des clips de fixation prévus à cet effet sur ledit joint.

Selon un mode de réalisation, ledit équipement de porte est constitué par une serrure de fermeture de la porte.

D'autres caractéristiques et avantages de l'invention ressortiront clairement de la description qui en est faite ci-après, à titre indicatif et nullement limitatif, en référence aux dessins annexés sur lesquels :
[Fig. 1] représente schématiquement une vue en coupe selon le plan longitudinal transversal XY du véhicule, d'une portion d'une porte latérale avant de véhicule automobile connue de l'art antérieur, en position de fermeture contre le côté de caisse du véhicule, et a déjà été décrite ;
[Fig. 2] est une vue similaire à celle de la figure 1, adaptée pour représenter une porte de véhicule conforme à l'invention ;
[Fig. 3a] est une vue de détail du support de joint formant pont sur vis de la porte illustrée à la figure 2, dans laquelle la lèvre souple du support occupe une position de recouvrement de la vis ;
[Fig. 3b] correspond à la vue de la figure 3a, dans laquelle la lèvre souple du support occupe une position de montage, permettant un accès à la vis ;
[Fig. 4] représente schématiquement une vue en coupe axiale selon l'axe I-I de la figure 3a de la porte selon l'invention ;
[Fig. 5a]-[Fig. 5d] représentent schématiquement des étapes de montage du joint sur la porte conformément à la présente invention.

Pour les besoins de la description, on se référera à un repère orthonormé direct XYZ, classiquement utilisé en conception automobile, dans lequel l'axe X désigne la direction longitudinale du véhicule, orienté vers l'arrière, l'axe Y désigne la direction transversale et est orienté vers la droite du véhicule, et l'axe Z désigne la direction verticale, et est orienté vers le haut.

Dans la description, des éléments identiques ou analogues porteront les mêmes références numériques.

En référence à la figure 2 est donc illustrée une porte latérale avant 10' d'une d'un véhicule automobile conforme à l'invention. La figure 2 reprend les mêmes éléments que la figure 1, à savoir le caisson de porte 11, le panneau extérieur 12, ainsi que la serrure de fermeture 14 dont est munie la porte 10' sur son chant 13. Pour coopérer avec la serrure 14, le pied milieu 31 comporte une gâche 33 constituée d'une plaque de fixation 34 en forme de U, dont les branches sont reliées à un montant du pied milieu 31, l'une des branches étant destinée à retenir un pêne 141 de la serrure 14, qui en s'engageant dans la gâche 33 permet d'immobiliser la porte 10' en position de fermeture sur le côté de caisse 30 du véhicule. On a en outre représenté sur la figure 2, une vis de fixation 15 de la serrure 14 permettant de fixer la serrure 14 sur la tôlerie du caisson de porte.

Conformément à l'invention, la porte 10' comprend un support de joint 40, comprenant une partie 42 formant pont, destinée à s'étendre au-dessus de la tête de vis 16 de la vis de fixation 15, cette partie 42 formant pont sur vis étant destinée à être épousée au moins partiellement par le joint d'étanchéité 20 sensiblement tubulaire cheminant le long du pourtour de la porte sur le chant 13 du caisson de porte. Ainsi, au cours de son cheminement le long du chant 13 du caisson de porte 11, le joint 20 peut passer sur cette partie 42 formant pont recouvrant la vis de fixation15, de sorte que son cheminement n'a pas besoin d'être détourné lorsque le joint 20 arrive au voisinage de la serrure 14 et, en particulier au niveau de la vis de fixation 15. Autrement dit, la partie 42 formant pont sur vis permet de positionner le joint directement en surplomb de la vis et, au lieu que le cheminement du joint 20 contourne cette dernière par l'extérieur comme dans la solution illustrée à la figure 1, le joint 20 poursuit son cheminement sensiblement linéairement dans cette zone grâce au pont sur vis 42 offert par le support de joint 40, sur lequel le joint 20 peut cheminer. Il en résulte avantageusement un cheminement optimisé pour le joint 20, en particulier au voisinage de la serrure 14 et partant, un côté de caisse bien plus « lissé » au niveau des zones d'appui du joint, porte fermée. On évite en particulier d'avoir dans la zone du pied milieu 31 située en regard de la serrure de porte 14, des formes telles que la forme localisée 32 faisant saillie vers l'extérieur, comme illustré à la figure 1. Le côté de caisse 30 est ainsi beaucoup plus aisé à réaliser, notamment pat emboutissage, du fait de l'absence de telles formes.

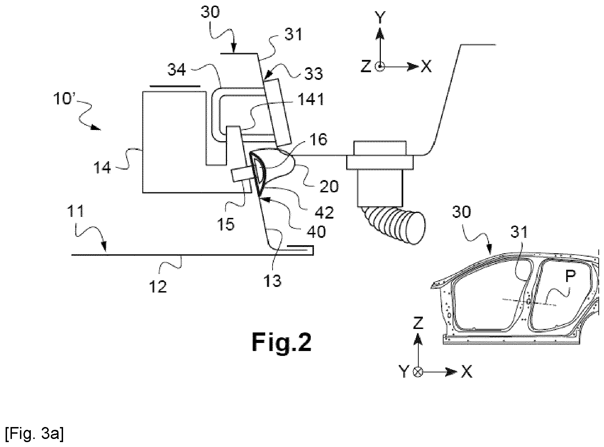

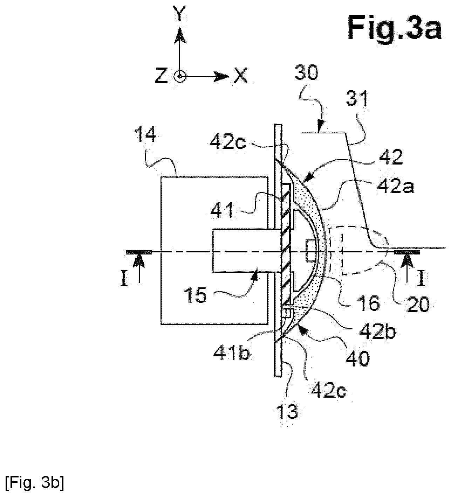

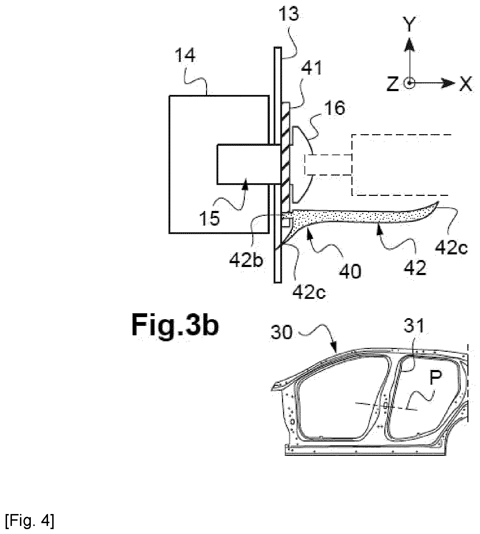

On va maintenant décrire plus en détail le support de joint 40, en référence aux figures 3a, 3b et 4. Le support de joint 40 est monté solidaire de la vis de fixation 15. Pour ce faire, le support de joint 40 comporte une embase rigide 41 prévue pour être insérée entre le chant 13 du caisson de porte 11 et la tête de vis 16 de la vis de fixation 15. Comme on le voit mieux sur la vue en coupe axiale de la figure 4, l'embase rigide 41 est pourvue d'une fente latérale 41a permettant d'insérer le support de joint 40 entre la tête de vis 16 et la tôlerie de porte sur son chant, avant serrage de la vis 15. Lors du serrage de la vis 15, l'embase rigide 41 du support de joint 40, insérée par sa fente latérale 41a sur la tige de vis, se trouve coincée entre la tôlerie de porte et la tête de vis 16 de la vis de fixation 15, tandis que des parties de surface périphérique de l'embase rigide 41 font saillie dans le plan de l'embase rigide tout autour de la tête de vis 16, de part et d'autre de la fente latérale.

La partie 42 formant pont sur vis du support de joint 40 est constituée par une lame souple, liée à l'embase rigide 41 et qui est conçue pour permettre de recouvrir de façon amovible la tête 16 de la vis de fixation 15. La lame souple 42 est par exemple de forme sensiblement rectangulaire. La lame souple 42 peut notamment être en un matériau polymère thermoplastique à base d'élastomère.

Préférentiellement, la lame souple 42 est fixée sur ladite embase rigide 41 par clipsage. A cet égard, la lame souple 42 comporte des pions 42b faisant saillie en direction de l'embase rigide 41 et qui sont destinés à être enfichés serrés dans des orifices 41b correspondants prévus sur l'embase rigide 41, au niveau de ses parties de surface périphérique situées autour de la tête de vis 16.

La figure 3a illustre la lame souple 42, solidaire de l'embase rigide 41, en position de recouvrement de la tête de vis 16. Dans cette position de recouvrement, la lame souple 42 s'étend au-dessus de la tête de vis 16, de part et d'autre de celle-ci, en définissant une surface externe convexe 42a, sur laquelle le joint 20 est adapté à venir cheminer. La lame souple 42 autorise ainsi le passage du joint 20 directement au droit de la zone occupée par la vis de fixation 15, le joint 20 venant épouser à cet endroit la surface externe convexe 42a de la lame souple 42.

Comme illustré à la figure 3b, une position de montage est autorisée pour la lame souple 42. Dans cette position de montage, la lame souple 42 est désolidarisée en partie de l'embase rigide 41, à laquelle elle reste liée par les pions 42b engagés dans les orifices 41b prévus le long du côté de l'embase rigide 41 opposé à la fente latérale 41a, de façon à permettre de soulever la lame souple 42 par rapport à l'embase rigide 41, par exemple de façon que la lame souple 42 s'étende dans un plan orienté à au moins 90° par rapport au plan de l'embase rigide 41, et ainsi permettre l'accès à un outil de vissage 50 lors du montage pour visser la vis de fixation 15.

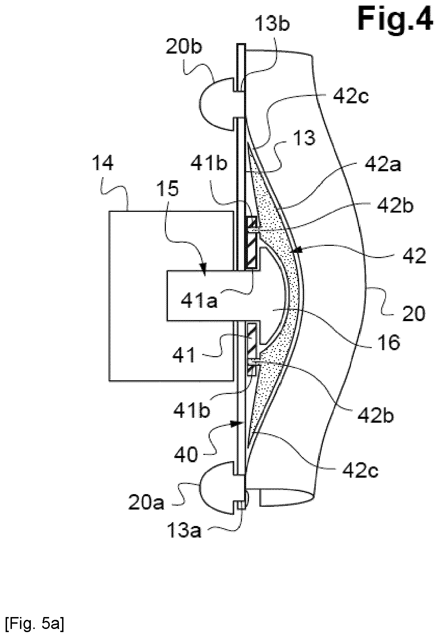

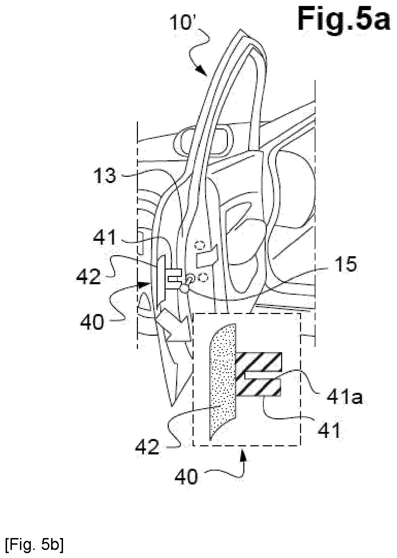

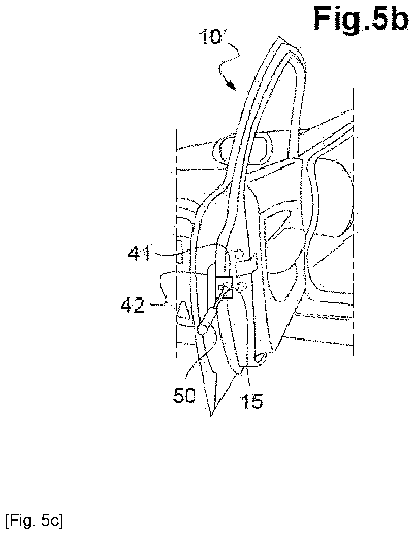

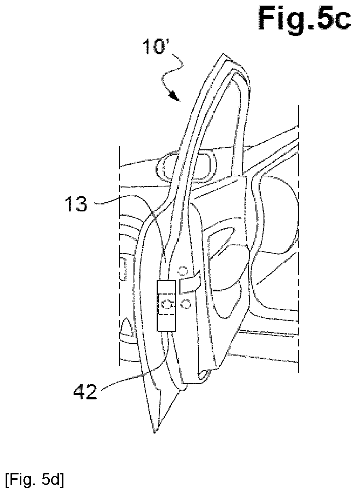

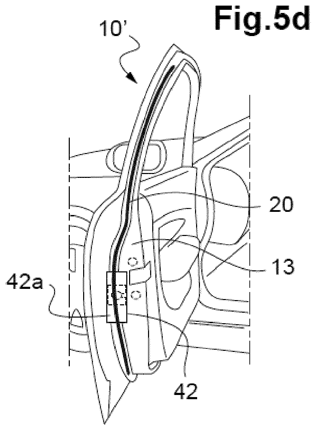

Les figures 5a et 5b illustrent cette étape de montage. Ainsi, la lame souple 42 étant en position de montage, le support de joint 40 est glissée entre la tête de vis et la tôlerie de porte en insérant la fente latérale 41a ménagée dans l'embase rigide 41 dans la tige de vis (figure 5a). Puis, comme illustré à la figure 5b, la vis de fixation 15 est serrée via l'outil de vissage 50, permettant de coincer l'embase rigide 41 entre la tête de vis et la tôlerie de porte. Une fois la vis de fixation serrée, comme illustré à la figure 5c, la lame souple 42 peut être relâchée et venir occuper sa position de recouvrement de la vis de fixation. Le joint 20 peut enfin venir cheminer sur la surface externe 42a de la lame souple 42 recouvrant la vis, comme illustré figure 5d.

Par ailleurs, comme on le voit mieux sur les figures 3a, 3b et 4, les bords de la lame souple 42 forment des lèvres souples 42c, qui sont destinées à s'appliquer avec une légère déformation sur les surfaces du chant 13 du caisson de porte qui s'étendent autour de l'embase rigide 41 du support de joint 40, lorsque la lame souple 42 occupe sa position de recouvrement de la tête de vis. Ces lèvres souples 42c permettent ainsi d'empêcher toute entrée d'eau entre le support de joint 40 et la tôlerie de porte.

Enfin, en référence à la figure 4, on peut voir que des orifices de montage 13a, 13b sont agencés sur la surface du chant 13 du caisson de porte, immédiatement en amont et en aval du support de joint 40, suivant la direction de cheminement du joint 20. Ces orifices de montage 13a et 13b sont prévus pour recevoir par clipsage des clips de fixation 20a, 20b, prévus sur la base du joint 20. Ainsi, grâce à ces clips de fixation 20a, 20b montés dans les orifices de montage 13a et 13b correspondants, situés immédiatement en amont et en aval du support de joint 40, le joint 20 est plaqué contre la surface externe 42a de la lame souple 42 et épouse parfaitement la portion de surface de la lame souple sur laquelle il chemine.

## Revendications

1. Porte (10') de véhicule automobile comportant un caisson de porte (11) doté d'un panneau extérieur (12), ladite porte étant apte à être pourvue d'un joint d'étanchéité (20) fixé sur le caisson à l'opposé du panneau extérieur, ledit joint cheminant le long du pourtour de la porte sur un chant (13) du caisson de façon à assurer l'étanchéité tout autour de la porte entre ledit chant (13) du caisson et un côté de caisse (30) de véhicule automobile lorsque la porte est dans une configuration de fermeture par rapport à ce côté de caisse, ladite porte étant munie sur son chant d'au moins un équipement de porte (14) monté sur le caisson de porte par l'intermédiaire d'au moins une vis de fixation (15), ladite porte comprend un support de joint (40) monté solidaire de ladite vis de fixation, **caractérisée en ce que** ledit support de joint comporte une lame souple (42) apte à recouvrir de façon amovible une tête (16) de ladite vis de fixation, ladite lame souple (42) définissant, dans sa position de recouvrement de la tête de vis, une surface externe (42a) convexe destinée à être épousée au moins partiellement par ledit joint, le support de joint (40) étant une pièce distincte du joint destiné à épouser la surface externe dudit support de joint (40).

2. Porte selon la revendication 1, **caractérisée en ce que** ledit support de joint (40) comporte une embase rigide (41) apte à être insérée entre ledit chant (13) dudit caisson de porte et la tête de vis (16) de ladite vis de fixation, ladite embase rigide (41) étant solidaire de ladite lame souple (42).

3. Porte selon la revendication 2, **caractérisée en ce que** ladite lame souple (42) est fixée sur ladite embase rigide (41) par clipsage.

4. Porte selon la revendication 3, **caractérisée en ce que** ladite lame souple (42) comporte, à l'opposé de ladite surface externe convexe, des pions (42b) faisant saillie en direction de ladite embase rigide (41) et destinés à être engagés serrés dans des orifices (41b) correspondants prévus sur ladite embase rigide.

5. Porte selon la revendication 4, **caractérisée en ce que** lesdits pions (42b) et ladite lame souple (42) viennent de moulage d'une seule pièce.

6. Porte selon l'une quelconque des revendications précédentes, **caractérisé en ce que** les bords de la lame souple (42) forment des lèvres souples (42c), lesdites lèvres souples (42c) étant destinées à s'appliquer sur des surfaces du chant dudit caisson de porte s'étendant autour dudit support de joint (40), lorsque ladite lame souple (42) est en position de recouvrement de la tête de vis (16).

7. Porte selon l'une quelconque des revendications précédentes, **caractérisé en ce que** des orifices de montage (13a, 13b) sont agencés sur la surface du chant dudit caisson de porte, immédiatement en amont et en aval dudit support de joint (40), suivant la direction de cheminement du joint (20), lesdits orifices de montage étant aptes à recevoir par clipsage des clips de fixation (20a, 20b) prévus à cet effet sur ledit joint.

8. Porte selon l'une quelconque des revendications précédentes, **caractérisé en ce que** ledit équipement de porte est constitué par une serrure de fermeture de la porte.

## Patentansprüche

1. Tür (10') eines Kraftfahrzeugs mit einem Türkasten (11), der mit einer Außenplatte (12) versehen ist, wobei die Tür dazu geeignet ist, mit einer Dichtung (20) versehen zu sein, die auf der gegenüberliegenden Seite der Außenplatte befestigt ist, wobei die Dichtung entlang des Umfangs der Tür auf einer Kante (13) des Kastens verläuft, um die Dichtigkeit rund um die Tür zwischen der Kante (13) des Kastens und einer Seite der Karosserie (30) des Kraftfahrzeugs zu gewährleisten, wenn sich die Tür in einer in Bezug auf diese Seite der Karosserie geschlossenen Konfiguration befindet, wobei die Tür an ihrer Kante mit einer Türausrüstung (14) ausgestattet ist, die mittels mindestens einer Befestigungsschraube (15) am Türkasten montiert ist, wobei die Tür einen Dichtungsträger (40) aufweist, der fest mit der Befestigungsschraube verbunden montiert ist,
**dadurch gekennzeichnet, dass** der Dichtungsträger eine flexible Lamelle (42) aufweist, die dazu geeignet ist, einen Kopf (16) der Befestigungsschraube lösbar zu bedecken, wobei die flexible Lamelle (42) in ihrer den Schraubenkopf bedeckenden Position eine konvexe Außenfläche (42a) definiert, die dazu bestimmt ist, zumindest teilweise durch die Dichtung angepasst zu werden, wobei der Dichtungsträger (40) ein von der Dichtung getrenntes Teil ist, das dazu bestimmt ist, sich an die Außenfläche des Dichtungsträgers (40) anzupassen.

2. Tür nach Anspruch 1, **dadurch gekennzeichnet, dass** der Dichtungsträger (40) eine starre Basis (41) aufweist, die dazu geeignet ist, zwischen der Kante (13) des Türkastens und dem Schraubenkopf (16) der Befestigungsschraube eingefügt zu sein, wobei die starre Basis (41) fest mit der flexiblen Lamelle (42) verbunden ist.

3. Tür nach Anspruch 2, **dadurch gekennzeichnet, dass** die flexible Lamelle (42) über eine Clipverbindung an der starren Basis (41) befestigt ist.

4. Tür nach Anspruch 3, **dadurch gekennzeichnet, dass** die flexible Lamelle (42) gegenüber der konvexen Außenfläche Stifte (42b) aufweist, die in Richtung der starren Basis (41) vorstehen und dazu bestimmt sind, klemmend in entsprechende Öffnungen (41b), die an der starren Basis vorgesehen sind, einzugreifen.

5. Tür nach Anspruch 4, **dadurch gekennzeichnet, dass** die Stifte (42b) und die flexible Lamelle (42) aus einem Stück gegossen sind.

6. Tür nach einem der vorangehenden Ansprüche, **dadurch gekennzeichnet, dass** die Ränder der flexiblen Lamelle (42) flexible Lippen (42c) bilden, wobei die flexiblen Lippen (42c) dazu bestimmt sind, an Kantenflächen des Türkastens, die sich um den Dichtungsträger (40) erstrecken, anzuliegen, wenn sich die flexible Lamelle (42) in der Position befindet, in der sie den Schraubenkopf (16) bedeckt.

7. Tür nach einem der vorangehenden Ansprüche, **dadurch gekennzeichnet, dass** auf der Kantenfläche des Türkastens unmittelbar vor und hinter dem Dichtungsträger (40) in der Verlaufsrichtung der Dichtung (20) Montageöffnungen (13a, 13b) vorgesehen sind, wobei die Montageöffnungen dazu geeignet sind, zu diesem Zweck an der Dichtung vorgesehene Befestigungsclips (20a, 20b) über eine Clipverbindung aufzunehmen.

8. Tür nach einem der vorangehenden Ansprüche, **dadurch gekennzeichnet, dass** die Türausrüstung aus einem Schloss zum Schließen der Tür gebildet ist.

## Claims

1. Motor vehicle door (10') having a door casing (11) provided with an outer panel (12), said door being able to be provided with a seal (20) fastened to the casing on the opposite side from the outer panel, said seal extending along the perimeter of the door on an edge face (13) of the casing so as to ensure the sealing all around the door between said edge face (13) of the casing and a motor vehicle bodyshell side (30) when the door is in a configuration of closure with respect to this bodyshell side, said door being provided on its edge face with at least one item of door equipment (14) mounted on the door casing via at least one fastening screw (15), said door comprising a seal support (40) mounted secured to said fastening screw, **characterized in that** said seal support has a flexible strip (42) that is able to removably cover a head (16) of said fastening screw, said flexible strip (42) defining, in its position covering the screw head, a convex external surface (42a) intended to be hugged at least partially by said seal, the seal support (40) being a piece that is separate from the seal intended to hug the external surface of said seal support (40).

2. Door according to Claim 1, **characterized in that** said seal support (40) has a rigid baseplate (41) that is able to be inserted between said edge face (13) of said door casing and the screw head (16) of said fastening screw, said rigid baseplate (41) being secured to said flexible strip (42).

3. Door according to Claim 2, **characterized in that** said flexible strip (42) is fastened to said rigid baseplate (41) by clip-fastening.

4. Door according to Claim 3, **characterized in that** said flexible strip (42) has, on the opposite side from said convex external surface, pins (42b) protruding in the direction of said rigid baseplate (41) and intended to be engaged tightly in corresponding orifices (41b) provided on said rigid baseplate.

5. Door according to Claim 4, **characterized in that** said pins (42b) and said flexible strip (42) are moulded in a single piece.

6. Door according to any one of the preceding claims, **characterized in that** the edges of the flexible strip (42) form flexible lips (42c), said flexible lips (42c) being intended to press against surfaces of the edge face of said door casing extending around said seal support (40), when said flexible strip (42) is in the position covering the screw head (16).

7. Door according to any one of the preceding claims, **characterized in that** mounting orifices (13a, 13b) are arranged on the surface of the edge face of said door casing, immediately upstream and downstream of said seal support (40), in the direction of extension of the seal (20), said mounting orifices being able to receive, by clip-fastening, fastening clips (20a, 20b) provided for this purpose on said seal.

8. Door according to any one of the preceding claims, **characterized in that** said item of door equipment is constituted by a lock for closing the door.
